# EUROPÄISCHE PATENTANMELDUNG

(11) **EP 0 609 788 A2**
(43) Veröffentlichungstag der Anmeldung: **10.08.1994**
(21) Anmeldenummer: 94101306.2
(22) Anmeldetag: 28.01.1994
(51) Int. Cl.: A01K 3/00, A01K 29/00, E01C 11/22

(54) **Leitrinne zum Ableiten von Amphibien von befahrbaren Wegen**

(30) Priorität: 05.02.1993 DE 4303429
(71) Anmelder: ACO Severin Ahlmann GmbH & Co. KG, D-24755 Rendsburg (DE)
(72) Erfinder: Bladt, Wulf, D-24782 Büdelsdorf (DE); Lüneburg, Henning, D-23623 Ahrensbök-Schwochel (DE)
(74) Vertreter: Bohnenberger, Johannes, Dr.

(57) **Zusammenfassung**

Um Amphibien während deren Wanderzeiten vom Überqueren von Straßen abzuhalten, sind Leitsysteme bekannt. An den Stellen, an welchen kleinere Straßen, insbesondere Feld- oder Wanderwege, auf eine befahrene Straße münden, können die bekannten Leitsysteme jedoch nicht eingesetzt werden. Es wird eine Leitrinne zum Ableiten von Amphibien von befahrenen Wegen vorgeschlagen, welche eine quer über den Weg (2) verlegbare Rinne (10) mit einer Gitter- oder Stabrostabdeckung (11) umfaßt, deren Maschen- oder Schlitzbreite während der Amphibienwanderzeiten derart erweiterbar ist, daß die Abdeckung (11) überquerende Amphibien durch die Maschen oder Schlitze in die Rinne (10) zur Weiterleitung in dieser fallen.

## Beschreibung

Die Erfindung betrifft eine Leitrinne zum Ableiten von Amphibien von befahrbaren Wegen.

Eine Vielzahl von Amphibien, insbesondere Kröten, Frösche und Lurche, suchen Gewässer nur zur Paarungs- und Laichzeit auf. Danach wandern sie wieder in die Umgebung ab. Die jungen Tiere wandern ebenfalls in die Umgebung ab. Hierbei werden oftmals erhebliche Strecken zurückgelegt.

Aufgrund der Erschließung der Kulturlandschaft durch Straßen und Wege werden die Wanderwege der Amphibien oftmals abgeschnitten. Diese Gefahrenzonen sind den Amphibien nicht bewußt, so daß es zu einer erheblichen, den Artenbestand ernstlich gefährdenden Dezimierung der Tiere kommen kann. Auch die Straßenbenutzer werden gefährdet.

Um die Tiere einerseits am Überqueren der Straßen zu hindern, andererseits aber dennoch zu den Laichplätzen und wieder zurückgelangen zu lassen, ist es bekannt, beiderseits von Straßen im Amphibien-Wanderbereich Leitwände aufzustellen. Sobald die Tiere eine derartige Leitwand erreichen, die ihnen den direkten Weg zu ihrem Ziel versperrt, wandern sie diese Leitwand entlang, um einen Durchschlupf zu finden. In gewissen Abständen werden nun zwischen den Leitwänden auf beiden Seiten einer Straße unter dieser durchführende Tunnel vorgesehen, die dann das ersehnte Schlupfloch für die Tiere bieten. Auf diese Weise ist ein gefahrloses Unterqueren der Straßen und Fahrwege möglich. Derartige Leitwände bzw. Leitsysteme sind beispielsweise aus der EP 273 338 B1, der DE 89 06 534 U1 oder der DE 36 43 810 A1 bekannt.

Wenn nun auf eine größere Straße mit daneben angeordneten Leitwänden ein Feld- oder Waldweg führt, so muß man die Leitwände beiderseits des Weges enden lassen und dort Tunnel vorsehen. Statt eines einzigen Tunnels werden somit bei Einmündung eines Weges immer zwei Tunnel benötigt. Darüber hinaus ist es praktisch unvermeidbar, daß Amphibien auf dem Feldoder Waldweg wandern und so gar nicht an die Leitwände und somit auch nicht in den Tunnel zur gefahrlosen Unterquerung der Straße gelangen. Häufig kommt es zu massenhaften Anwanderungen von Amphibien auf Nebenwegen, da diese offenbar eine Leitwirkung aufzeigen. Sie gelangen vielmehr direkt auf die Straße.

Der Erfindung liegt die Aufgabe zugrunde, eine Anordnung aufzuzeigen, mit welcher Wege für Amphibien absperrbar, für Fahrzeuge und auch Fußgänger dennoch weiterhin benutzbar sind.

Diese Aufgabe wird durch eine Rinne gemäß Patentanpruch 1 gelöst.

Ein wesentlicher Punkt des anmeldungsgemäßen Gegenstandes liegt darin, daß die Abdeckung der Rinne während der doch stark begrenzten Wanderzeit der Amphibien derart verändert wird, daß die Maschen oder Schlitze breit genug sind, um die Tiere in die Rinne fallen zu lassen, in welcher sie dann aus dem Gefahrenbereich herauswandern. In der übrigen Zeit wird die Maschen- oder Schlitzbreite auf das übliche Maß zurückgeführt, wie es bei Entwässerungsrinnen im Straßenbau zu finden ist.

Die Abdeckung umfaßt vorzugsweise einen festen Rahmen, der auf der Rinne anbringbar ist, wodurch die Rinne nach oben abgeschlossen wird. Somit entsteht ein in sich stabiles, abnehmbares Teil, so daß die Rinne von Zeit zu Zeit gesäubert werden kann, um ihre Funktion als Leitweg sicherzustellen.

Vorzugsweise umfaßt die Abdeckung quer zur Rinnenlängsachse angeordnete Stützelemente, deren Oberfläche derart ausgebildet ist, daß die Amphibien keinen Halt darauf finden. Somit können die Stützelemente unverändert bleiben und vorzugsweise fest an der Abdeckung angebracht werden.

Besonders einfach ist die Anordnung dann hinsichtlich ihrer Maschen- oder Schlitzbreite veränderbar, wenn die Abdeckung verschiebbare oder abnehmbare Stäbe umfaßt, die sich in der Rinnenlängsachse erstrecken. Je nachdem, wie die Stäbe eingesetzt sind, entstehen damit größere oder kleinere Maschen bzw. Schlitze. Hierbei sind vorzugsweise lösbare Sicherungseinrichtungen vorgesehen, um die Stäbe in der Abdeckung zu fixieren, damit die Stäbe auch beim Überfahren der Abdeckung nicht herausspringen können.

Die Sicherungseinrichtungen sind vorzugsweise so ausgebildet, daß sie die Stäbe an den Stützelementen halten. Hierbei genügt im allgemeinen für jeden Stab (bzw. jede Gruppe von Stäben) eine einzige Sicherungseinrichtung. Derartige Sicherungseinrichtungen werden vorzugsweise als einhakbare Federn ausgebildet.

Vorzugsweise werden abwechselnd mit den verschiebbaren oder herausnehmbaren Stäben solche Stäbe vorgesehen, die mit der Abdeckung fest verbunden sind. Es genügt nämlich im allgemeinen, wenn man von einer üblichen Schlitzbreite auf die doppelte Schlitzbreite (durch Heraussnehmen entsprechender Stäbe) übergeht, um die Amphibien sicher in die Rinne gelangen zu lassen.

Vorzugsweise sind Aufnahmeeinrichtungen vorgesehen, um herausgenommene Stäbe aufzubewahren. Die Stäbe müssen also nicht an einen anderen Ort transportiert und dort gelagert werden, sie können vielmehr an Ort und Stelle aufbewahrt werden. Dies ist insbesondere dann besonders vorteilhaft, wenn die Stäbe einzeln abnehmbar oder verschiebbar sind.

Alternativ kann man die Stäbe in Gruppen, und zwar vorzugsweise alle verschiebbaren oder abnehmbaren Stäbe einer Abdeckung zusammen abnehmen oder verschieben. Eine solche Bildung von Gruppen kann durch Querelemente geschehen, welche die Stäbe miteinander verbinden.

Vorzugsweise werden bei dieser Ausführungsform des Anmeldungsgegenstandes die durch die Querelemente verbundenen Stäbe, die ebenso wie die festen Stäbe ein Gitter bilden, derart verschoben, daß die verschiebbaren Stäbe direkt neben den festen Stäben zu liegen kommen. Dadurch wird einerseits die erforderliche Schlitzbreite garantiert, andererseits wird die Festigkeit der Abdeckung nicht verändert, und ein Aufbewahren von herausgenommenen Stäben ist nicht nötig.

Vorzugsweise wird die Rinne im Bereich ihres Innenbodens aus Polymerbeton gefertigt, dessen Oberfläche sehr glatt ist. Dadurch kann die Rinne leicht und gründlich gereinigt werden und wird von den Amphibien als Wanderweg angenommen.

Bevorzugte Ausführungsformen des Anmeldungsgegenstandes ergeben sich aus den Unteransprüchen.

Nachfolgend werden Ausführungsbeispiele des Anmeldungsgegenstandes anhand von Abbildungen näher erläutert. Hierbei zeigen:
- **Fig. 1**: eine Skizze zur Erläuterung der Einbauweise einer Stopprinne,
- **Fig. 2**: einen Querschnitt durch einen Rinnenkörper,
- **Fig. 3**: ein Teilquerschnitt durch eine Abdeckung,
- **Fig. 4**: eine Abdeckung in Draufsicht,
- **Fig. 5**: einen Schnitt entlang der Linie V-V aus Fig. 4,
- **Fig. 6**: eine Seitenansicht eines herausnehmbaren Stabes,
- **Fig. 7**: eine Draufsicht auf einen herausnehmbaren Stab,
- **Fig. 8**: eine Seitenansicht eines Längsrandes,
- **Fig. 9**: einen Schnitt entlang der Linie IX-IX aus Fig. 8,
- **Fig. 10-12**: Ansichten ähnlich denen nach den Figuren 5-7, jedoch durch eine andere Ausführungsform einer Abdeckung,
- **Fig. 13**: eine Draufsicht auf eine Abdeckung gemäß den Figuren 10-12 ohne eingelegte bewegliche Stäbe und
- **Fig. 14 und 15**: die Anordnung nach den Figuren 10-13 in zwei verschiedenen Betriebspositionen.

Bei der nachfolgenden Beschreibung werden für gleiche und gleich wirkende Teile dieselben Bezugsziffern verwendet.

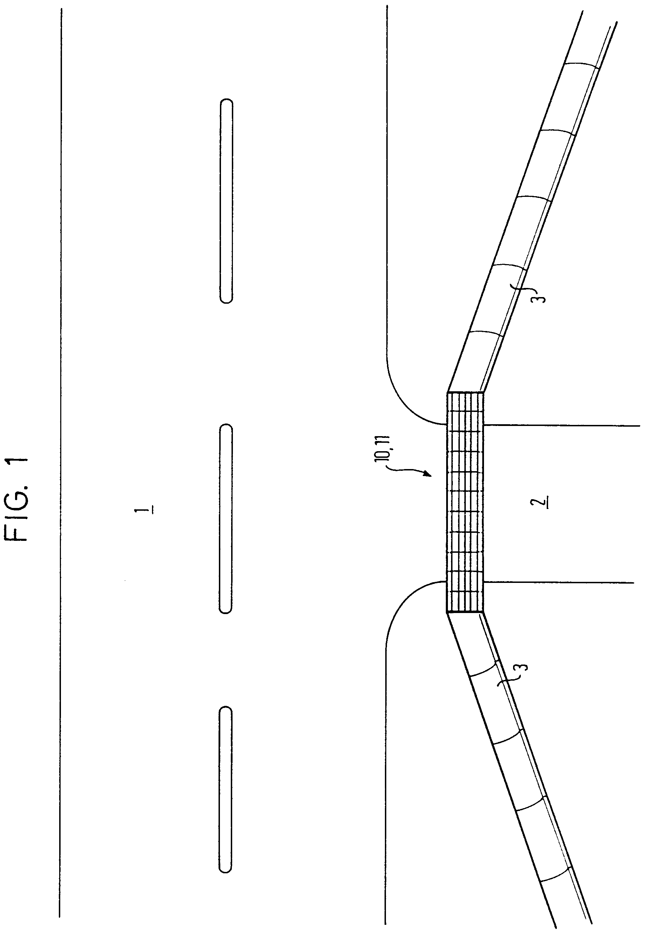

In Fig. 1 ist gezeigt, wie eine Rinne 10/11 in einem Weg 2 zu installieren ist, der auf eine "Hauptstraße" 1 führt, welche durch Leitwände 3 zum Schutze von wandernden Amphibien abgeschirmt ist. Hierbei können die Amphibien (z.B. in Fig. 1 von links kommend) die Leitwand 3 (nach rechts) entlangwandern und unter der Oberfläche des Weges 2 die Rinne 10 mit daraufliegender Abdeckung 11 durchquerend weiterwandern. Diejenigen Amphibien, welche den Weg 2 (in Fig. 1 von unten nach oben) entlangwandern, fallen durch die entsprechend eingestellten Gitterstäbe der Abdeckung 11 in die Rinne 10 und werden darum ebenfalls zur Leitwand 3 geführt, so daß sie nicht auf die Straße 1 gelangen.

Nachfolgend wird die Rinne mit Abdeckung näher beschrieben.

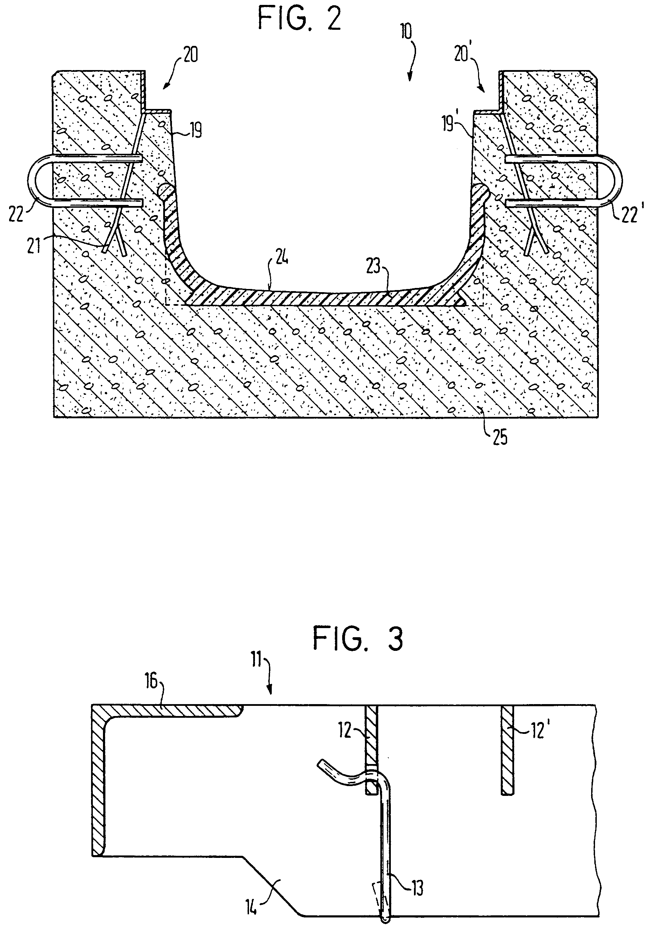

Wie in Fig. 2 gezeigt, umfaßt die Rinne 10 einen Rinnenkörper 25, der vorzugsweise aus Beton gegossen ist. In den Rinnenkörper 25 ist eine Wanne 23 (vorzugsweise aus Polymerbeton) eingegossen, welche einen Boden 24 bildet, der sanft abgerundet in die Seitenwände 19, 19' der Rinne 10 übergeht. Die Formgebung ist hierbei derart, daß die Verletzungsgefahr für Tiere, welche in die Rinne fallen, minimal ist.

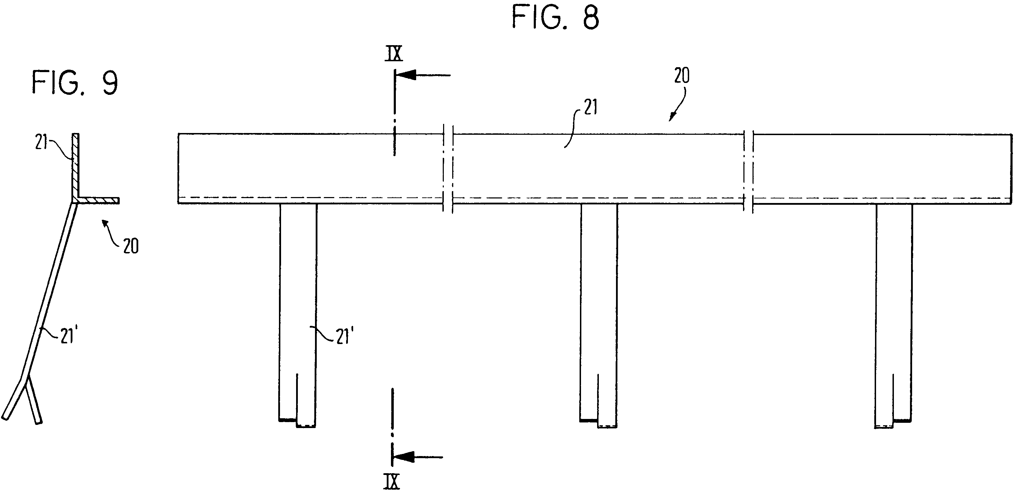

Am oberen Rand des Rinnenkörpers 25 sind Zargen 20, 20' vorgesehen, welche (wie in den Figuren 8 und 9 deutlicher gezeigt) aus einem Winkelprofil 21 bestehen, an welchem Anker 21' befestigt sind. Die Winkelprofile 21 sind derart gestaltet, daß eine Abdeckung 11 mit nur geringem Spiel hineingelegt werden kann.

Darüber hinaus sind (an beiden Seiten der Rinne 10 jeweils zwei) Transportösen 22, 22' in den Rinnenkörper 25 miteingegossen, so daß die Rinnen 10 leicht gehandhabt werden können.

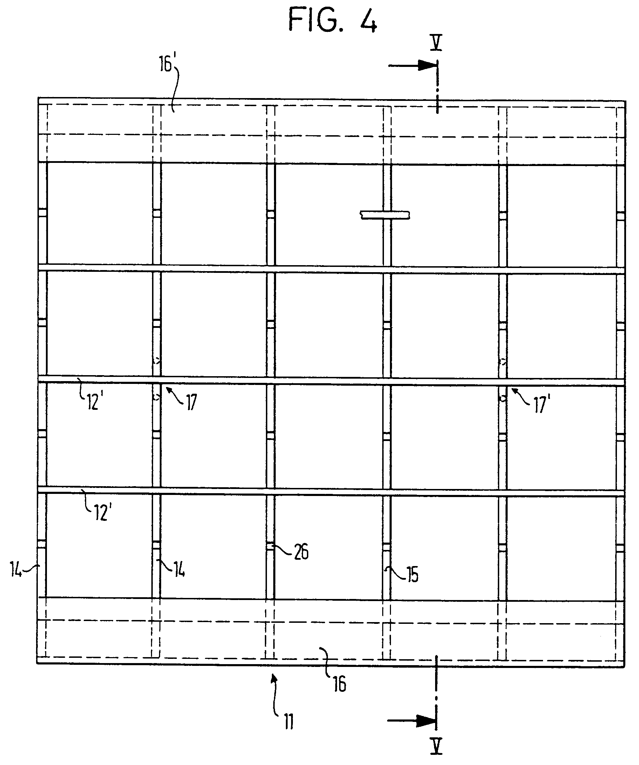

Nachfolgend wird eine erste bevorzugte Ausführungsform einer Abdeckung 11 anhand der Figuren 3 bis 7 näher erläutert. Die hier gezeigte Ausführungsform einer Abdeckung 11 umfaßt zwei Winkelprofile zur Bildung von Längsrändern 16, 16', welche über Stützelemente 14 fest miteinander verbunden sind. Parallel zu den Längsrändern 16, 16' sind feste Stäbe 12' zur Bildung eines Gitterrostes (Fig. 4) fest mit den Stützelementen 14 verbunden. Die Abstände zwischen den festen Stäben 12' sowie die Breite der Oberflächen 15 der Stützelemente 14 sind hierbei derart gewählt, daß sich Amphibien nicht auf dem so gebildeten Gitter halten können, sondern durch dessen Öffnungen hindurchfallen.

Die Stützelemente 14 sind darüber hinaus mit Kerben 26 jeweils mittig zwischen zwei festen Stäben 12' bzw. einem festen Stab 12' und einem Längsrand 16 bzw. 16' versehen.

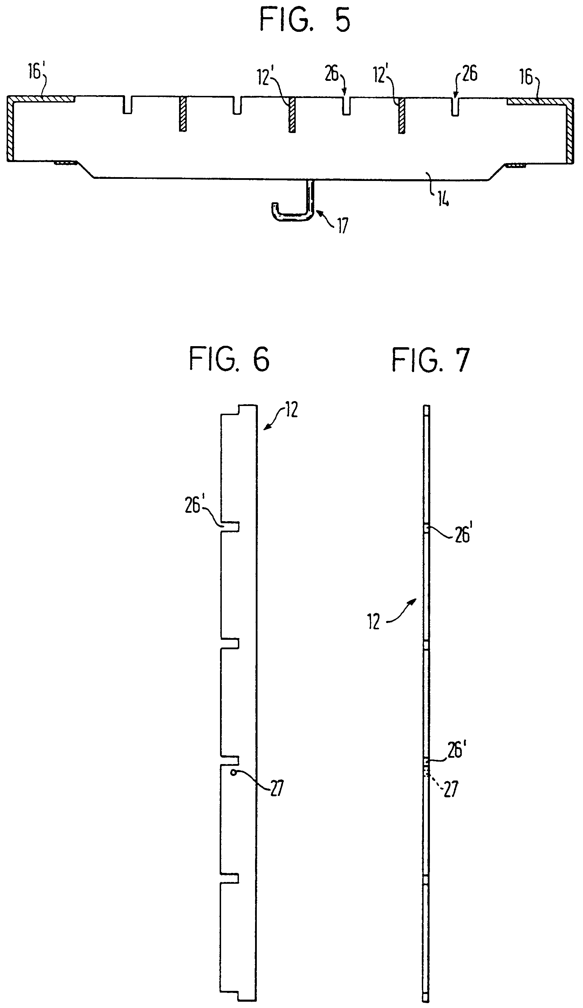

Gemäß den Figuren 6 und 7 sind abnehmbare Stäbe 12 vorgesehen, welche zu den Kerben 26 korrespondierend geformte Kerben 26' aufweisen. Die Dimensionierung ist hierbei so gewählt, daß die beweglichen Stäbe 12 mit ihren Kerben 26' in die Kerben 26 der Stützelemente 14 derart einrastbar sind, daß sie im eingerasteten Zustand dieselbe Position einnehmen wie die festen Stäbe 12'.

Weiterhin sind an zwei der Stützelelmente 14 nach unten, ins Innere der Rinne ragend, hakenförmige Aufnahmeelemente 17, 17' vorgesehen, welche derart geformt sind, daß alle für eine Abdeckung 11 vorgesehenen beweglichen Stäbe 12 in diesen gelagert werden können.

Wenn man somit bei einer eingebauten Anordnung (gemäß Fig. 1) während der Wanderzeit der Amphibien diese vor einem Überqueren der Straße 1 schützen will, so nimmt man die Abdeckungen 11 heraus, entfernt die beweglichen Stäbe 12 und legt diese in die Aufnahmeeinrichtungen 17, 17' ein. Sodann legt man die Abdeckungen 11 wieder auf die Rinnen 10 auf. Nun können einerseits immer noch Fahrzeuge die Rinnen 10 aufgrund der vorhandenen Abdeckungen 11 überqueren, jedoch fallen Amphibien, welche die Rinne überqueren wollen, in diese hinein. Sobald die Wanderzeit der Amphibien beendet ist, können die beweglichen Stäbe 12 wieder eingesetzt werden.

Um die beweglichen Stäbe 12 in der Abdeckung 11 zu sichern, können (wie in Fig. 3 gezeigt) Sicherungseinrichtungen 13 vorgesehen werden, die man in Form von einfachen Stahlhaken mit federelastischen Eigenschaften derart ausbilden kann, daß sie die beweglichen Stäbe 12 an den Stützelementen 14 halten. Im allgemeinen genügt für jeden beweglichen Stab 12 eine einzige Sicherungseinrichtung 13, die in ein entsprechendes Loch 27 (siehe Figuren 6 und 7) eingehakt werden kann.

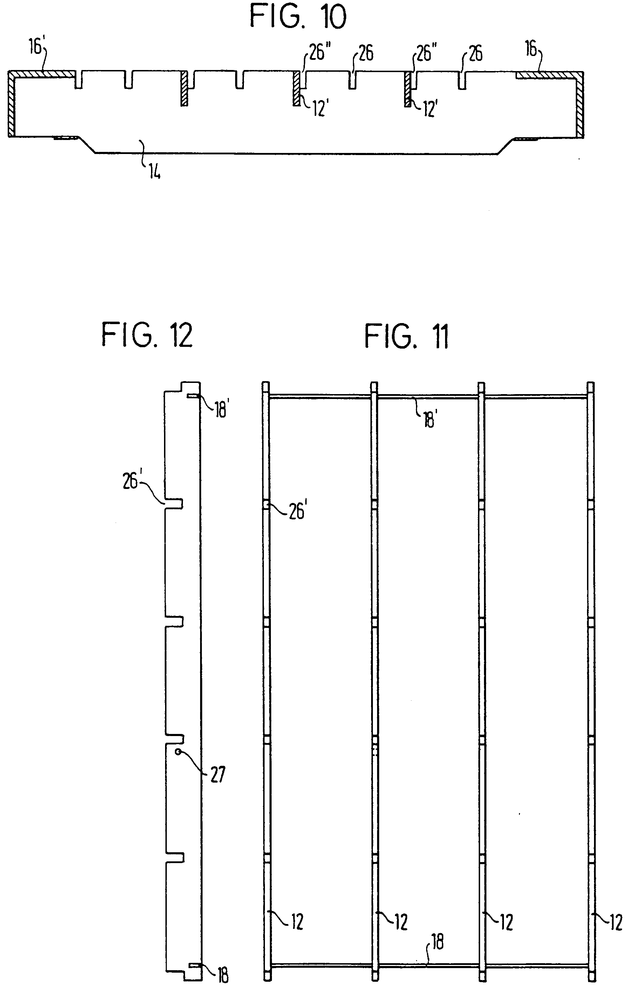

Eine alternative Ausführungsform des Anmeldungsgegenstandes ist in den Figuren 10 bis 15 dargestellt.

Bei dieser Ausführungsform sind die beweglichen Stäbe 12 über Querelemente 18, 18' miteinander verbunden. Somit können alle beweglichen Stäbe 12 gleichzeitig aus der Abdeckung 11 herausgehoben werden.

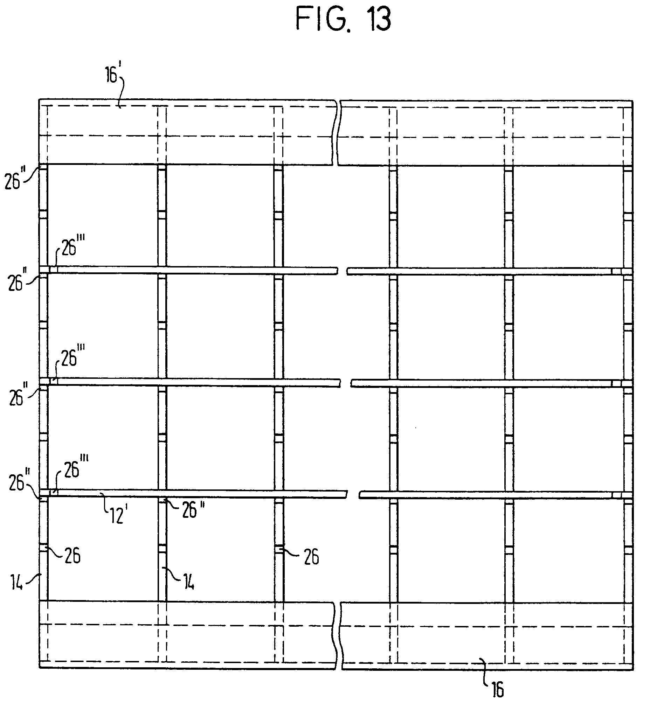

Weiterhin sind zusätzliche Kerben 26' in den Stützelementen 14 vorgesehen, und zwar in einem Abstand, der den Abständen zwischen den Kerben 26 entspricht. Die Kerben 26'' sind jeweils nahe neben oder direkt anschließend zu den festen Stäben 12' bzw. direkt neben einem Längsrand 16' angeordnet. Darüber hinaus weisen die festen Stäbe 12' zusätzliche Kerben 26''' (siehe Fig. 13) an Stellen auf, welche den Querelementen 18 entsprechen. Die Tiefen der Kerben sind dergestalt, daß die Querelemente 18 vollständig darin aufnehmbar sind. Alternativ kann man die Querelemente 18 entsprechend den Stützelementen 14 formen.

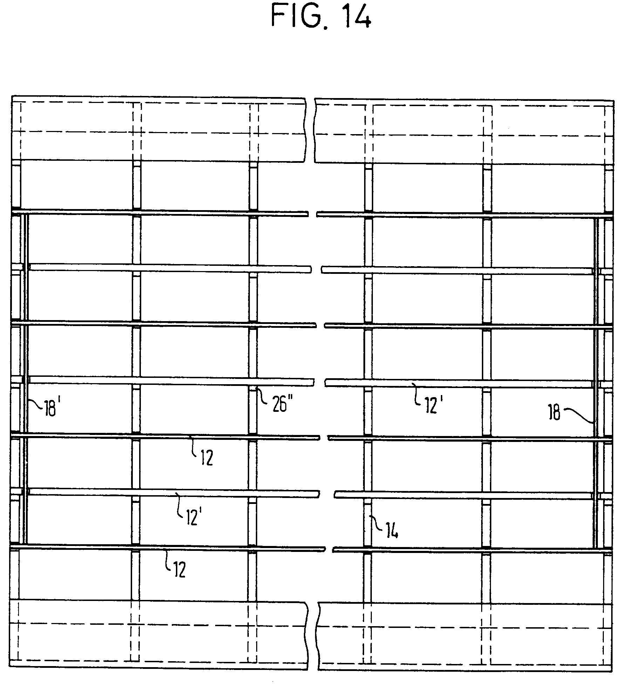

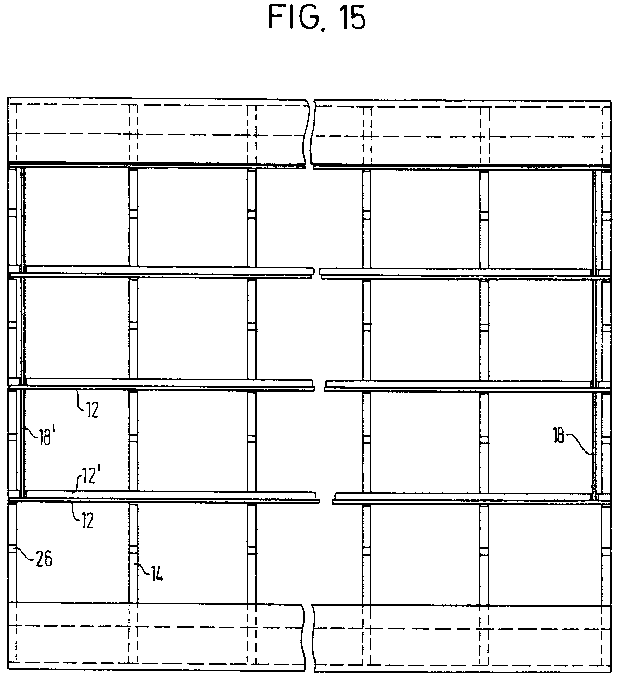

Bei der so ausgebildeten Ausführungsform kann man somit das aus den beweglichen Stäben 12 und den Querelementen 18 bestehende Gitter, das in Fig. 11 gezeigt ist, in die Abdeckung 11 gemäß Fig. 13 in zwei Positionen einsetzen. In der ersten Position, die in Fig. 14 gezeigt ist, befinden sich die beweglichen Stäbe 12 jeweils in der Mitte zwischen zwei festen Stäben 12'. Will man nun die Abdeckung 11 während der Wanderzeit der Amphibien umrüsten, so hebt man das gesamte Gitter 12'/18 heraus und positioniert es in den zusätzlichen Kerben 26', so daß man die in Fig. 15 gezeigte Konfiguration erzielt. Die Umrüstung ist also besonders einfach, und die Notwendigkeit einer Aufbewahrung der beweglichen Stäbe entfällt. Selbstverständlich kann eine Sicherung der beweglichen Stäbe 12' mittels der oben beschriebenen Sicherungseinrichtungen 13 zusätzlich erfolgen.

Aus Obigem geht hervor, daß es bei dem vorliegenden Anmeldungsgegenstand darauf ankommt, die Abdeckungen hinsichtlich ihrer Maschenweite zeitweise erweiterbar zu machen.

### Bezugszeichenliste

- 1: Hauptstraße
- 2: Feldweg
- 3: Leitwand
- 10: Rinne
- 11: Abdeckung
- 12: beweglicher Stab
- 12': fester Stab
- 13: Sicherungseinrichtung
- 14: Stützelement
- 15: Oberfläche
- 16: Längsrand
- 17: Aufnahmeinrichtung
- 18: Querelement
- 19: Seitenwand
- 20: Zarge
- 21: Winkelprofil
- 21': Anker
- 22: Transportöse
- 23: Wanne
- 24: Boden
- 25: Rinnenkörper
- 26: Kerbe
- 27: Loch

## Patentansprüche

1. Leitrinne zum Ableiten von Amphibien von befahrbaren Wegen (1),
**gekennzeichnet**
durch eine quer über den Weg verlegbare Rinne (10) mit einer Gitterrost- oder Stabrost-Abdeckung (11), deren Maschen- oder Schlitzbreite während der Amphibienwanderzeiten derart erweiterbar ist, daß die die Abdeckung (11) überquerenden Amphibien durch die Maschen oder Schlitze in die Rinne (10) zur Weiterleitung in dieser fallen.

2. Leitrinne nach Anspruch 1,
**dadurch gekennzeichnet**,
daß die Abdeckung (11) einen festen Rahmen (14, 16) umfaßt, der auf der Rinne (10) anbringbar ist und diese nach oben abschließt.

3. Leitrinne nach einem der Ansprüche 1 oder 2,
**dadurch gekennzeichnet**,
daß die Abdeckung (11) quer zur Rinnenlängsachse angeordnete Stützelemente (14) aufweist, deren Oberfläche (15) derart ausgebildet ist, daß die Amphibien keinen Halt darauf finden.

4. Leitrinne nach Anspruch 3,
**dadurch gekennzeichnet**,
daß die Stützelemente (14) fest an der Abdeckung (11) angebracht sind.

5. Leitrinne nach einem der vorgehenden Ansprüche,
**dadurch gekennzeichnet**,
daß die Abdeckung (11) verschiebbare oder abnehmbare Stäbe (12) umfaßt, die sich in der Rinnenlängsachse erstrecken.

6. Leitrinne nach Anspruch 5,
**dadurch gekennzeichnet**,
daß lösbare Sicherungseinrichtungen (13) vorgesehen sind, um die Stäbe (12) in der Abdeckung (11) zu fixieren.

7. Leitrinne nach Anspruch 6,
**dadurch gekennzeichnet**,
daß die Sicherungseinrichtungen (13) so angeordnet sind, daß sie die Stäbe (12) an Stützelementen (14) fixieren.

8. Leitrinne nach Anspruch 5,
**dadurch gekennzeichnet**,
daß abwechselnd mit den verschiebbaren oder abnehmbaren Stäben (12) mit der Abdeckung (11) fest verbundene Stäbe (12') vorgesehen sind.

9. Leitrinne nach Anspruch 5,
**dadurch gekennzeichnet**,
daß Aufnahmeeinrichtungen (17) vorgesehen sind, um herausgenommene Stäbe (12) aufzubewahren.

10. Leitrinne nach Anspruch 5,
**dadurch gekennzeichnet**,
daß die Stäbe (12) einzeln abnehmbar oder verschiebbar sind.

11. Leitrinne nach Anspruch 5,
**dadurch gekennzeichnet**,
daß die Stäbe (12) in Gruppen, vorzugsweise alle verschiebbaren oder abnehmbaren Stäbe (12) einer Abdeckung (11) umfassend, abnehmbar oder verschiebbar ausgebildet sind.

12. Leitrinne nach Anspruch 11,
**dadurch gekennzeichnet**,
daß die verschiebbaren oder abnehmbaren Stäbe (12) untereinander durch Querelemente (18) verbunden sind.

13. Leitrinne nach Anspruch 8,
**dadurch gekennzeichnet**,
daß die verschiebbaren oder abnehmbaren Stäbe (12) bei erweiterter Maschen- oder Schlitzbreite im wesentlichen direkt neben den mit der Abdeckung (11) fest verbundenen Stäben (12') in der Abdeckung (11) fixierbar sind.

14. Leitrinne nach einem der vorhergehenden Ansprüche,
**dadurch gekennzeichnet**,
daß die Rinne (10) mindestens im Bereich ihres (Innen-) Bodens (24) aus Polymerbeton gefertigt ist.
